# EUROPEAN PATENT SPECIFICATION

(11) **EP 4 190 632 B1**
(45) Date of publication and mention of the grant of the patent: **17.07.2024**
(21) Application number: 21211918.4
(22) Date of filing: 02.12.2021
(51) Int. Cl.: B60P 3/00, B60P 7/08, B60P 3/14

(54) **RACK SYSTEM FOR A COMMERCIAL VEHICLE AND METHOD FOR LATERALLY BALANCING AND LOADING OF A COMMERCIAL VEHICLE**
REGALSYSTEM FÜR EIN NUTZFAHRZEUG UND VERFAHREN ZUM SEITLICHEN AUSGLEICHEN UND BELADEN EINES NUTZFAHRZEUGS
SYSTÈME DE RAYONNAGE POUR UN VÉHICULE UTILITAIRE ET PROCÉDÉ D'ÉQUILIBRAGE LATÉRAL ET DE CHARGEMENT D'UN VÉHICULE UTILITAIRE

(43) Date of publication of application: 07.06.2023
(73) Proprietor: Ford Global Technologies, LLC, Dearborn, MI 48126 (US)
(72) Inventor: Lem, Jeroen, 6286 CG Wittem (NL); Godin, Keith Allen, Dearborn, MI, 48124 (US); Grein, Marcel, 52511 Geilenkirchen (DE); Eikelenberg, Nicole, 6231 RS Meerssen (NL); Line, Johnathan Andrew, Northville, MI, 48167 (US); Kish, Joseph Michael, Canton, MI, 48187 (US); Moua, Jimmy, Canton, MI, 48187 (US); Longin, David, 3020 Herent (BE); Kuck, Detlef, 52459 Inden (DE)
(74) Representative: Markowitz, Markus

(56) References cited:
- EP-A1- 3 112 212
- DE-A1- 102016 115 404
- US-A1- 2008 193 247
- US-A1- 2017 313 230

## Description

The invention relates to a rack system for a commercial vehicle according to the preamble of claim 1. Furthermore, the invention relates to a commercial vehicle having a rear storage compartment according to the preamble of claim 5. Further, the invention relates to a method for laterally balancing a loading of a commercial vehicle having a rear storage compartment according to the preamble of claim 6.

EP 3 112 212 A1 discloses a rack system according to the preamble of claim 1. A fastening system and a method for fastening an item in the fastening system adapted for a cargo or back space of a vehicle, are disclosed. The system comprises at least one elongated fastening rail for fastening an item and where the fastening rail is adapted to be attached to an inner surface of a cargo or backspace of a vehicle. The item is further arranged to move along the rail when subjected to a force above a predefined threshold value and to not move when subjected to forces below that treshold value.

Commercial vehicles can be used by a multitude of users with a very wide range of applications. A lot of the users place racks in a rear storage compartment of a commercial vehicle to store parts and/or tools and/or parcels, like, for example, a craftsman/handyman, who has a lot of items in the vehicle. But also for package delivery rack space is needed for all the packages.

Rack space is the ideal way to maximize load capacity of a commercial vehicle when the user has a lot of (relatively small) items to carry in the commercial vehicle, e.g. a van. But not all items can be stored in a rack, as they might be too big or too heavy. This leads to a trade-off between the available rack space and space for other items in the commercial vehicle.

Conventionally, the space for racks is limited to the left-side and right-side panels of the rear storage compartment of a commercial vehicle, where on one side usually space is taken away due to a sliding door at this position. This leads to the fact that the commercial vehicle space is not completely occupied and also that the commercial vehicle is still well underneath its capacity.

US 6 464 274 B2 relates to a slidable extensible platform for use with a motor vehicle cargo area having a cargo bed.

US 9 381 871 B2 relates to a cargo organizer for a vehicle. The cargo organizer comprises a frame at least partially forming a floor of a cargo area of the vehicle, and one or more elongate elements extendable across an opening defined by the frame, wherein the elongate elements engage the frame and are slidable with respect to the frame.

US 10 882 456 B2 relates to a rail system for mounting to a vehicle. The rail system comprises a frame mountable in the cargo area of a vehicle, a first fixed rail mounted to the frame, a first sliding rail slidably mounted on the first fixed rail for longitudinal movement relative to the first fixed rail, and a first panel coupled to the first sliding rail.

US 5 161 700 A relates to an adjustable storage system for vehicles. The system comprises a substantially flat base including means for securing said base within a vehicle, an upright fixed planar sidewall attached to the flat base, and an upright movable planar sidewall which is slidably adjustable and which cooperates with said fixed sidewall to provide lateral support to packages placed therebetween, said movable planar sidewall including first and second ends and being oriented generally parallel to said fixed planar sidewall. Furthermore, the system comprises means for slidably mounting said movable sidewall to said base for movement toward and away from said fixed sidewall, and cable means coupled to said first and second ends of said movable sidewall and said base for maintaining the general parallel orientation of said movable planar sidewall to said fixed planar sidewall as said movable planar sidewall is moved to thereby prevent binding as said movable sidewall is moved against packages placed on said base, said cable being substantially fixed in length. Further, the system comprises means for locking said movable sidewall into at least one use position.

DE 10 2014 001 031 A1 relates to a method for assisted loading of a motor vehicle which is loaded with at least one transport load which is detected by a sensor device and output as load information by an output device of the motor vehicle. The method comprising the steps of detecting a change in the sprung vehicle mass, which is correlated with the transport load, by means of a plurality of sensor devices arranged in the motor vehicle and generating signals corresponding to the change in the sprung vehicle mass and transmitting the signals to a central control unit of the motor vehicle, determining and evaluating the at least one transport load by the central control unit from the signals, taking into account the unsprung vehicle mass stored in the central control unit, generating the at least one load information, which concerns the transport load, by the central control unit and transmitting the at least one load information to the output device, and issuing of the load information by the output device.

It is an object of the invention to laterally balance a loading of a commercial vehicle.

According to the invention this object is solved by a rack system with the features of claim 1.

A Rack system for a commercial vehicle is presented, comprising at least one guide rail fixable to at least one vehicle structure of the commercial vehicle, and at least one rack slidingly supported by the guide rail back and forth in a lateral direction of the commercial vehicle, wherein at least one fixing unit for temporary fixing the rack selectively in one of several fixing positions disposed along the guide rail by fixing the rack to the guide rail and/or to the vehicle structure. According to the invention at least one electrically controllable actuator for slidingly moving said rack along the guide rail, at least one sensor unit for detecting a current lateral inclination state of the commercial vehicle, and at least one electronic control unit suitable to control the actuator according to the current lateral inclination state of the commercial vehicle, so that the lateral inclination of the commercial vehicle becomes minimal or zero.

It should be noted that the features and measures listed individually in the following description can be combined with each other in any technically useful manner and show further embodiments of the invention. The following description additionally characterizes and specifies the invention, in particular in connection with the figures.

A loading of a commercial vehicle having a rear storage compartment can be laterally balanced by temporary fixing the rack selectively in one of several fixing positions disposed along the guide rail by fixing the rack by means of the at least one fixing unit to the guide rail and/or to the vehicle structure. Through this, the lateral weight distribution of the loaded commercial vehicle can be optimized.

Conventionally, there is often an uneven lateral weight distribution of a loaded commercial vehicle leading to one side being more loaded than the other side, wherein the commercial is leaning over to that side that is loaded more. This leads to uneven wear and tear of commercial vehicle components, like tires, and to uneven handling characteristics of the commercial vehicle. These disadvantages could be minimized or eliminated by the invention.

The simplest way to achieve the load balancing according to the invention is a manual actuation of the rack, either by direct manual actuation of the rack or by indirect manual actuation on the rack by means of a mechanical actuation device of any kind. Through this, a user can move and afterwards fix the rack in that position of the several fixing positions disposed along the guide rail that seems to the user to cause an optimal lateral weight distribution.

The guide rail can be fixed to a floor structure of the rear storage compartment of the commercial vehicle, for example. The rack system may comprise two or more guide rails arranged parallel to each other and laterally spaced from each other.

For slidingly supporting the rack by the guide rail back and forth in a lateral direction of the commercial vehicle the rack may comprise at least one carriage slidably connecting the rack with the guide rail. Therefore, the rack and the guide rail may create a sliding guide. Alternately, the rack and the guide rail may create rolling element guide. The rack extends in the longitudinal direction of the commercial vehicle. Additionally, the rack may at least partly be extractable in the longitudinal direction of the vehicle, i. e. in a direction laterally to the guide rail. The rack system may comprise two or more racks arranged in series with respect to the guide rail, wherein the rack can be moved independently.

The fixing unit for temporary fixing the rack selectively in one of several fixing positions disposed along the guide rail by fixing the rack to the guide rail and/or to the vehicle structure can be a mechanical or electromechanical unit that can be actuated/activated manually or automatically. The fixing unit may be self-locking. For example, the fixing unit can be formed like a fixing unit of a conventional adjustment device for back and forth adjustment of a vehicle, i. e. the rack can be fixed to the guide rail at certain fixing positions arranged at equal distances from each other.

According to the invention, as described above, the rack system comprises at least one electrically controllable actuator for slidingly moving said rack along the guide rail, at least one sensor unit for detecting a current lateral inclination state of the commercial vehicle, and at least one electronic control unit suitable to control the actuator according to the current lateral inclination state of the commercial vehicle, so that the lateral inclination of the commercial vehicle becomes minimal or zero. The electrically controllable actuator may be an electromechanical actuator with or without gear transmission. The electrically controllable actuator can act like a conventional electronic adjustment of memory vehicle seats. The sensor unit may be suitable for determining the current lateral imbalance of the loaded commercial vehicle and/or the lateral position of the center of mass of the loaded commercial vehicle. The electronic control unit controls the electrically controllable actuator until the commercial vehicle is laterally balanced as good as possible.

According to a further advantageous embodiment the sensor unit comprises at least one load sensor, at least one dynamics sensor, and/or at least one crash sensor. The dynamics sensor can be an ABS sensor.

According to a further advantageous embodiment the rack system comprises at least one anti-pinch unit connected with the control unit. Through this, there can be provided a pinch recognition, so that any motion of the rack can be stopped immediately when it is sensed that there is too much resistance to the movement of the rack. The pinch-recognition unit may have at least one sensor or may be formed to determine the current resistance value from current electric characteristics of the electrically controllable actuator. Alternatively, the anti-pinch unit can be integrated in the electronic control unit.

According to a further advantageous embodiment the rack system comprises at least two racks slidingly supported by the guide rail and arranged in series to each other with respect to the guide rail. Depending on the manual efforts to move the racks, the rack system can be formed like a conventional library system having a wheel for each rack to drive each rack along the guide rail. By moving the racks relative to each other, the user can get access to each of the individual racks. This creates a unique solution, where a lot of rack space is created in a small volume of the rear storage compartment, optimizing the utilization rate of the commercial vehicle, and maximizing the efficiency of the user's business. Therefore, this solution also leaves a lot of floor space in the rear storage compartment for large items, that can be positioned at the sliding door, for example. The rack system can be formed so that a space between the adjacent racks moved away from each other in opposite directions could be large enough for a user to walk through to the front space of the rear storage compartment. Therefore, if all racks are moved to one side, on the other side of the racks can be a path where the user could walk through. The number of racks of the rack system can be chosen depending on the required rack depth and the dimensions and amount of the cargo to be carried with the commercial vehicle. The racks could also be used and positioned to retain larger pieces of cargo between them. For example, for they could be used to clamp and therefore retain longer tubes or wooden posts. Therefore, the present embodiment provides a more efficient way of offering rack space in the commercial vehicle to get a better trade-off between the amount of racks and space for other items, to maximize the utilization rate of a rear storage compartment of the commercial vehicle.

According to the invention the above-mentioned object is furthermore solved by a commercial vehicle with the features of claim 5, comprising at least one rack system according to one of the preceding embodiments or a combination of at least two of these embodiments with each other, wherein the rack system is accessible through a rear load opening of the commercial vehicle.

The advantages mentioned above with reference to the rack system are correspondingly associated with the commercial vehicle. The racks can be located in a part of the rear storage compartment that is arranged between the rear opening of the rear storage compartment and the lateral sliding door.

According to the invention the above-mentioned object is further solved by a method with the features of claim 6.

A Method for laterally balancing a loading of a commercial vehicle having a rear storage compartment is presented, wherein at least one rack slidingly supported back and forth in a lateral direction of the commercial vehicle by at least one guide rail fixed to at least one vehicle structure of the commercial vehicle is temporary fixed selectively in one of several fixing positions disposed along the guide rail by fixing the rack to the guide rail and/or to the vehicle structure. According to the invention, a current lateral inclination state of the commercial vehicle is detected and at least one electrically controllable actuator for slidingly moving said rack along the guide rail is controlled according to the current lateral inclination state of the commercial vehicle, so that the lateral inclination of the commercial vehicle becomes minimal or zero.

The advantages mentioned above with reference to the rack system are correspondingly associated with the method. In particular, the rack system according to one of the above-mentioned embodiments or a combination of at least two of these embodiments with each other can be used for carrying out the method.

Further advantageous embodiments of the invention are disclosed in the dependent claims and the following figure description. It shows
- Fig. 1a: schematic views of an embodiment of a commercial vehicle according to the invention in an unbalanced loading state;
- Fig. 1b: schematic views of the commercial vehicle shown in Fig. 1a in a balanced loading state;
- Fig. 2a: a schematic view of a further embodiment of a commercial vehicle according to the invention;
- Fig. 2b: a further schematic view of the commercial vehicle shown in Fig. 2a;
- Fig. 3: a further schematic view of the commercial vehicle shown in Figs. 2a and 2b and
- Fig. 4: a flow chart for an embodiment of a method according to the invention.

In the various figures, the same parts are always provided with the same reference signs, which is why they are generally described only once.

Embodiments of the invention are described hereinafter. It is to be understood, however, that the disclosed embodiments are merely examples and other embodiments may take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the embodiments. As those of ordinary skill in the art will understand, various features illustrated and described with reference to any one of the figures may be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

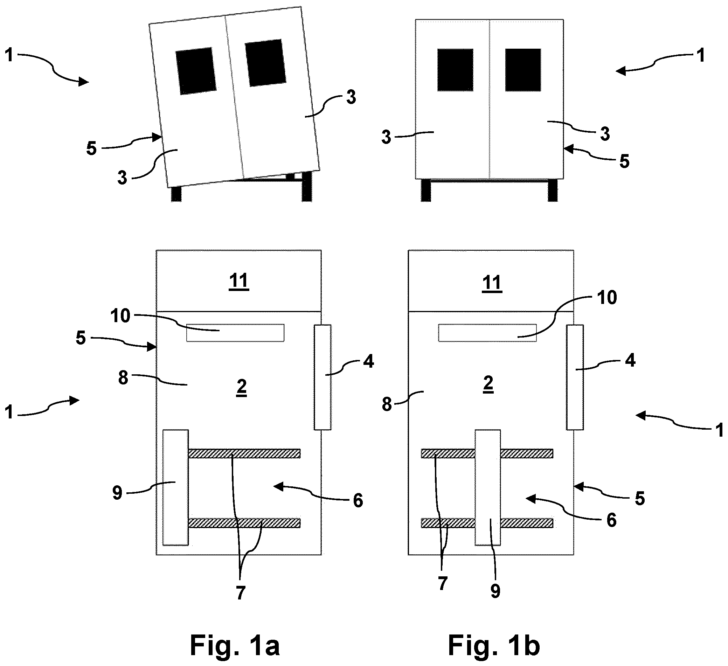

Fig. 1a shows schematic views of an embodiment of a commercial vehicle 1 according to the invention in an unbalanced loading state. In the upper part of Fig. 1a the commercial vehicle is shown in a schematic rear view and in the lower part of Fig. 1a the commercial vehicle 1 is shown in a schematic top view. The commercial vehicle 1 has a rear storage compartment 2 that is closed at the rear end by two doors 3 (shown in the upper part of Fig. 1a) and laterally closed by a sliding door 4 (shown in the lower part of Fig. 1a). The sprung mass 5 of the commercial vehicle 1 is leaning to the left side (shown in the upper part of Fig. 1a) due to the unbalanced loading of the rear storage compartment, as shown in the lower part of Fig. 1a. The commercial vehicle 1 further comprises a driver cabin 11 in front of the rear storage compartment 2.

The commercial vehicle 1 comprises a rack system 6, wherein the rack system 6 is accessible through a rear load opening (not shown) of the commercial vehicle 1 being closed by the doors 3. The rack system 6 mainly extends between the rear doors 3 and the sliding door 4. In the front part of the rear storage compartment 2 there is a fixed rack 10.

The rack system 6 comprises two guide rails 7 fixed to a floor 8 of the rear storage compartment 2 of the commercial vehicle 1. The guide rails 7 are arranged parallel to each other and laterally spaced from each other. The guide rails 7 extend in the lateral direction of the commercial vehicle 1.

Furthermore, the rack system 6 comprises a rack 9 slidingly supported by the guide rails 7 back and forth in the lateral direction of the commercial vehicle 1.

Moreover, the rack system 6 comprises at least one fixing unit (not shown) for temporary fixing the rack 9 selectively in one of several fixing positions disposed along the guide rails 7 by fixing the rack 9 to the guide rails 7 and/or to the floor 8.

Additionally, the rack system 6 may comprise at least one electrically controllable actuator (not shown) for slidingly moving said rack 9 along the guide rails 7, at least one sensor unit (not shown) for detecting a current lateral inclination state of the commercial vehicle 1, and at least one electronic control unit (not shown) suitable to control the actuator according to the current lateral inclination state of the commercial vehicle 1, so that the lateral inclination of the commercial vehicle 1 becomes minimal or zero. For this, the sensor unit may comprise at least one load sensor (not shown), at least one dynamics sensor (not shown), and/or at least one crash sensor (not shown).

Further, the rack system 6 may comprise at least one anti-pinch unit (not shown) connected with the control unit.

Fig. 1b shows schematic views of the commercial vehicle 1 shown in Fig. 1a in a balanced loading state. The state shown in Fig. 1b emanates from the state shown in Fig. 1a by a lateral displacement of the rack 9 and fixation of the rack 9 in a middle position.

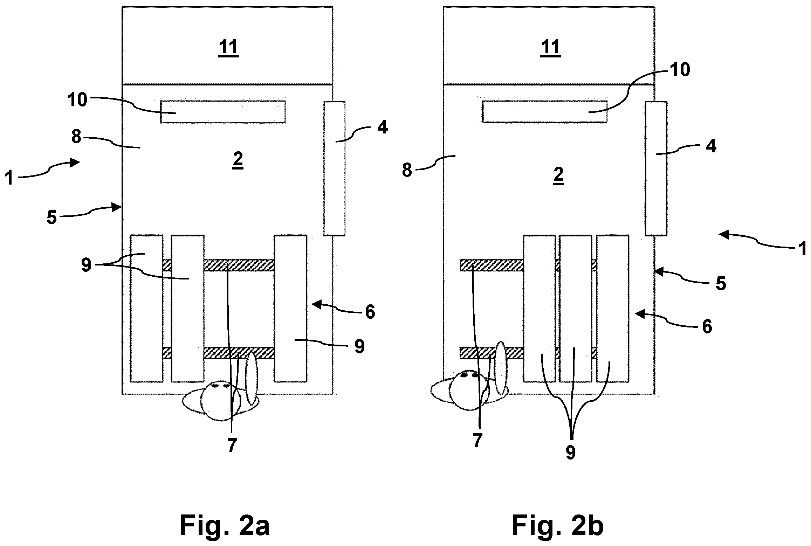

Fig. 2a shows a schematic view of a further embodiment of a commercial vehicle 1 according to the invention. The commercial vehicle 1 differs from the embodiment shown in Figs. 1a und 1b in that the rack system 6 comprises three racks 9. To avoid repetition, reference is made to the above description of Figs. 1a and 1b.

Fig. 2b shows a further schematic view of the commercial vehicle shown 1 in Fig. 2a. The state shown in Fig. 2b emanates from the state shown in Fig. 2a by a lateral displacement of two racks 9 to the right.

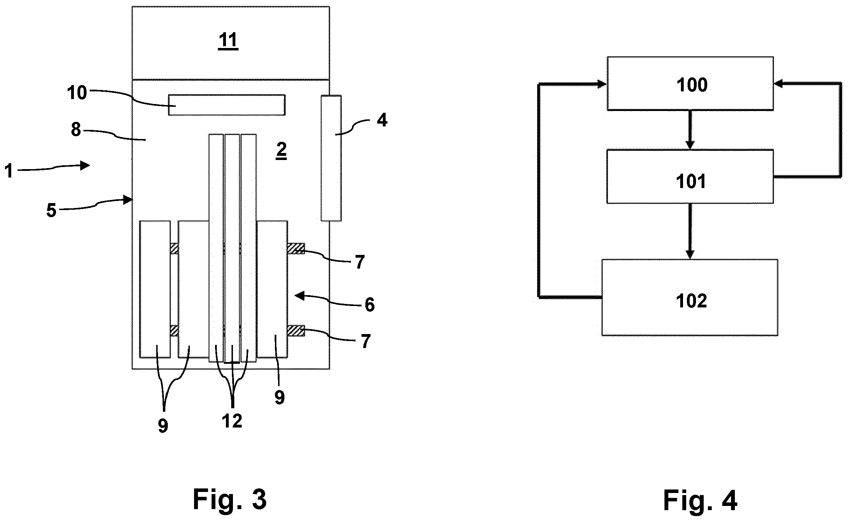

Fig. 3 shows a further schematic view of the commercial vehicle 1 shown in Figs. 2a and 2b. In Fig. 3 two racks are additionally used to clamp three wooden posts 12.

Fig. 4 shows a flow chart for an embodiment of a method for laterally balancing a loading of a commercial vehicle having a rear storage compartment according to the invention.

In method step 100 a current lateral inclination state of the commercial vehicle is detected. This can be done by monitoring the center of mass of the loaded commercial vehicle with respect to the lateral direction.

In method step 101 it is determined if the center of mass if the loaded commercial vehicle is laterally shifted so that the commercial vehicle is leaning to one side. If the center of mass of the loaded commercial vehicle is correspondingly shifted, in method step 102, at least one rack slidingly supported back and forth in a lateral direction of the commercial vehicle by at least one guide rail fixed to at least one vehicle structure of the commercial vehicle is laterally displaced and afterwards temporary fixed selectively in one of several fixing positions disposed along the guide rail by fixing the rack to the guide rail and/or to the vehicle structure. To achieve this, at least one electrically controllable actuator for slidingly moving said rack along the guide rail is controlled according to the current lateral inclination state of the commercial vehicle, so that the lateral inclination of the commercial vehicle becomes minimal or zero. If the center of mass of the loaded commercial vehicle is not correspondingly shifted the method returns to method step 100.

### Reference signs

- 1: commercial vehicle
- 2: rear storage compartment
- 3: door
- 4: sliding door
- 5: sprung mass
- 6: rack system
- 7: guide rail
- 8: floor
- 9: rack
- 10: fixed rack
- 11: driver cabin
- 12: wooden post

- 100-102: method steps

## Claims

1. Rack system (6) for a commercial vehicle (1), comprising at least one guide rail (7) fixable to at least one vehicle structure of the commercial vehicle (1), and at least one rack (9) slidingly supported by the guide rail (7) back and forth in a lateral direction of the commercial vehicle (1), wherein at least one fixing unit for temporary fixing the rack (9) selectively in one of several fixing positions disposed along the guide rail (7) by fixing the rack (9) to the guide rail (7) and/or to the vehicle structure
**characterized by**
at least one electrically controllable actuator for slidingly moving said rack (9) along the guide rail (7), at least one sensor unit for detecting a current lateral inclination state of the commercial vehicle (1), and at least one electronic control unit suitable to control the actuator according to the current lateral inclination state of the commercial vehicle (1), so that the lateral inclination of the commercial vehicle (1) becomes minimal or zero.

2. Rack system (6) according to claim 1,
**characterized in that**
the sensor unit comprises at least one load sensor, at least one dynamics sensor, and/or at least one crash sensor.

3. Rack system (6) according to claim 1 or 2,
**characterized by**
at least one anti-pinch unit connected with the control unit.

4. Rack system (6) according to one of the preceding claims,
**characterized by**
at least two racks (9) slidingly supported by the guide rail (7) and arranged in series to each other with respect to the guide rail (7).

5. Commercial vehicle (1) having a rear storage compartment (2),
**characterized by**
at least one rack system (6) according to one of the preceding claims, wherein the rack system (6) is accessible through a rear load opening of the commercial vehicle (1).

6. Method for laterally balancing a loading of a commercial vehicle (1) having a rear storage compartment (2), wherein at least one rack (9) slidingly supported back and forth in a lateral direction of the commercial vehicle (1) by at least one guide rail (7) fixed to at least one vehicle structure of the commercial vehicle (1) is temporary fixed selectively in one of several fixing positions disposed along the guide rail (7) by fixing the rack (9) to the guide rail (7) and/or to the vehicle structure
**characterized in that**
a current lateral inclination state of the commercial vehicle (1) is detected and at least one electrically controllable actuator for slidingly moving said rack (9) along the guide rail (7) is controlled according to the current lateral inclination state of the commercial vehicle (1), so that the lateral inclination of the commercial (1) vehicle becomes minimal or zero.

## Patentansprüche

1. Regalsystem (6) für ein Nutzfahrzeug (1), umfassend mindestens eine Führungsschiene (7), die an mindestens einer Fahrzeugstruktur des Nutzfahrzeugs (1) fixierbar ist, und mindestens ein Regal (9), das durch die Führungsschiene (7) in eine Seitenrichtung des Nutzfahrzeugs (1) vor und zurück verschiebbar gelagert ist, wobei mindestens eine Fixierungseinheit zum selektiven vorübergehenden Fixieren des Regals (9) in einer von mehreren Fixierungspositionen entlang der Führungsschiene (7) durch Fixieren des Regals (9) an der Führungsschiene (7) und/oder der Fahrzeugstruktur angeordnet ist,
**gekennzeichnet durch**
mindestens ein elektrisch steuerbares Stellglied zum Verschieben des Regals (9) entlang der Führungsschiene (7), mindestens eine Sensoreinheit zum Erfassen eines aktuellen Seitenneigungszustands des Nutzfahrzeugs (1) und mindestens eine elektronische Steuereinheit, die dazu geeignet ist, das Stellglied entsprechend des aktuellen Seitenneigungszustands des Nutzfahrzeugs (1) zu steuern, sodass die Seitenneigung des Nutzfahrzeugs (1) minimal oder gleich null wird.

2. Regalsystem (6) nach Anspruch 1,
**dadurch gekennzeichnet, dass**
die Sensoreinheit mindestens einen Lastsensor, mindestens einen Dynamiksensor und/oder mindestens einen Aufprallsensor umfasst.

3. Regalsystem (6) nach Anspruch 1 oder 2,
**gekennzeichnet durch**
mindestens eine mit der Steuereinheit verbundene Klemmschutzeinheit.

4. Regalsystem (6) nach einem der vorstehenden Ansprüche,
**gekennzeichnet durch**
mindestens zwei Regale (9), die durch die Führungsschiene (7) verschiebbar gelagert und in Bezug zur Führungsschiene (7) hintereinander angeordnet sind.

5. Nutzfahrzeug (1) mit einem hinteren Stauraum (2), **gekennzeichnet durch**
mindestens ein Regalsystem (6) nach einem der vorstehenden Ansprüche, wobei das Regalsystem (6) durch eine hintere Ladeöffnung des Nutzfahrzeugs (1) zugänglich ist.

6. Verfahren zum seitlichen Ausgleichen einer Last eines Nutzfahrzeugs (1) mit einem hinteren Stauraum (2), wobei mindestens ein Regal (9), das durch mindestens eine Führungsschiene (7), die an mindestens einer Fahrzeugstruktur des Nutzfahrzeugs (1) fixiert ist, in eine Seitenrichtung des Nutzfahrzeugs (1) vor und zurück verschiebbar gelagert ist, durch Fixieren des Regals (9) an der Führungsschiene (7) und/oder der Fahrzeugstruktur selektiv vorübergehend in einer von mehreren Fixierungspositionen, die entlang der Führungsschiene (7) angeordnet sind, fixiert ist,
**dadurch gekennzeichnet, dass**
ein aktueller Seitenneigungszustand des Nutzfahrzeugs (1) erfasst wird und mindestens ein elektrisch steuerbares Stellglied zum Verschieben des Regals (9) entlang der Führungsschiene (7) entsprechend des aktuellen Seitenneigungszustands des Nutzfahrzeugs (1) gesteuert wird, sodass die Seitenneigung des Nutzfahrzeugs (1) minimal oder gleich null wird.

## Revendications

1. Système de rayonnage (6) pour un véhicule utilitaire (1), comprenant au moins un rail de guidage (7) pouvant être fixé à au moins une structure de véhicule du véhicule utilitaire (1), et au moins un rayonnage (9) supporté de manière coulissante par le rail de guidage (7) d'un côté à l'autre dans une direction latérale du véhicule utilitaire (1), au moins une unité de fixation pour la fixation temporaire du rayonnage (9) sélectivement dans l'une de plusieurs positions de fixation situées le long du rail de guidage (7) en fixant le rayonnage (9) au rail de guidage (7) et/ou à la structure de véhicule
**caractérisé par**
au moins un actionneur pouvant être commandé électriquement pour déplacer de manière coulissante ledit rayonnage (9) le long du rail de guidage (7), au moins une unité de capteur pour détecter un état d'inclinaison latérale actuel du véhicule utilitaire (1), et au moins une unité de commande électronique permettant de commander l'actionneur en fonction de l'état d'inclinaison latérale actuel du véhicule utilitaire (1), de sorte que l'inclinaison latérale du véhicule utilitaire (1) devienne minime ou nulle.

2. Système de rayonnage (6) selon la revendication 1, **caractérisé en ce que**
l'unité de capteur comprend au moins un capteur de charge, au moins un capteur de dynamique et/ou au moins un capteur de collision.

3. Système de rayonnage (6) selon la revendication 1 ou 2,
**caractérisé par**
au moins une unité anti-pincement reliée à l'unité de commande.

4. Système de rayonnage (6) selon l'une des revendications précédentes,
**caractérisé par**
au moins deux rayonnages (9) supportés de manière coulissante par le rail de guidage (7) et disposés en série l'un par rapport à l'autre par rapport au rail de guidage (7).

5. Véhicule utilitaire (1) comportant un compartiment de rangement arrière (2),
**caractérisé par**
au moins un système de rayonnage (6) selon l'une des revendications précédentes, le système de rayonnage (6) étant accessible par une ouverture de chargement arrière du véhicule utilitaire (1).

6. Procédé pour équilibrer latéralement le chargement d'un véhicule utilitaire (1) comportant un compartiment de rangement arrière (2), au moins un rayonnage (9) supporté de manière coulissante d'un côté à l'autre dans une direction latérale du véhicule utilitaire (1) par au moins un rail de guidage (7) fixé à au moins une structure de véhicule du véhicule utilitaire (1) étant fixé temporairement sélectivement dans l'une de plusieurs positions de fixation situées le long du rail de guidage (7) en fixant le rayonnage (9) au rail de guidage (7) et/ou à la structure de véhicule
**caractérisé en ce que**
un état d'inclinaison latérale actuel du véhicule utilitaire (1) est détecté et au moins un actionneur pouvant être commandé électriquement pour déplacer de manière coulissante ledit rayonnage (9) le long du rail de guidage (7) est commandé en fonction de l'état d'inclinaison latérale actuel du véhicule utilitaire (1), de sorte que l'inclinaison latérale du véhicule utilitaire (1) devienne minimale ou nulle.
